**Europäisches Patentamt**

**European Patent Office**

**Office européen des brevets**

(19)

(11) Veröffentlichungsnummer : **0 302 123 B1**

(12) **EUROPÄISCHE PATENTSCHRIFT**

(45) Veröffentlichungstag der Patentschrift :
**22.07.92 Patentblatt 92/30**

(51) Int. Cl.$^5$ : **B01D 17/02**

(21) Anmeldenummer : **88902609.2**

(22) Anmeldetag : **05.02.88**

(86) Internationale Anmeldenummer :
**PCT/SU88/00031**

(87) Internationale Veröffentlichungsnummer :
**WO 88/06055 25.08.88 Gazette 88/19**

(54) **KLÄRAPPARAT FÜR FLÜSSIG-FLÜSSIG-EXTRAKTOREN.**

(30) Priorität : **18.02.87 SU 4196871**

(43) Veröffentlichungstag der Anmeldung :
**08.02.89 Patentblatt 89/06**

(45) Bekanntmachung des Hinweises auf die
Patenterteilung :
**22.07.92 Patentblatt 92/30**

(84) Benannte Vertragsstaaten :
**AT BE DE FR GB SE**

(56) Entgegenhaltungen :
**BE-A- 671 688**
**FR-A- 758 420**
**SU-A- 799 781**
**SU-A- 1 131 525**
**US-A- 3 820 954**

(73) Patentinhaber : **INSTITUT KHIMII I
TEKHNOLOGII REDKIKH ELEMENTOV I
MINERALNOGO SYRYA KOLSKOGO FILIALA
AKADEMII NAUK SSSR
ul. Fersmana, 14 Murmanskaya obl.
Apatity, 184200 (SU)**

(72) Erfinder : **SKLOKIN, Leonid Irineevich
ul. Kozlova, 5-38
Murmanskaya obl. Apatity, 184200 (SU)**
Erfinder : **LEIF, Vladimir Eduardovich
ul. Zinovieva, 8-34
Murmanskaya obl. Apatity, 184200 (SU)**

Erfinder : **SEDNEV, Jury Mikhailovich
ul. Dzerzhinskogo, 45-82
Murmanskaya obl. Apatity, 184200 (SU)**
Erfinder : **MASLOBOEVA, Sofya Mikhailovna
ul. Stroitelei, 41-41
Murmanskaya obl. Apatity, 184200 (SU)**
Erfinder : **KOVALEVSKY, Vladimir Pavlovich
ul. Fersmana, 54-118
Murmanskaya obl. Apatity, 184200 (SU)**
Erfinder : **STEFANOVICH, Boris Mikhailovich
ul. Festivalnaya, 10-63
Murmanskaya obl. Apatity, 184200 (SU)**
Erfinder : **KALINNIKOV, Vladimir Trofimovich
ul. Zinovieva, 10-65
Murmanskaya obl. Apatity, 184200 (SU)**
Erfinder : **KORPUSOV, Genrikh Vasilievich
Leninsky pr., 69-3-398
Moscow, 117296 (SU)**
Erfinder : **ANTONOV, Vladimir Iliich
ul. Zhdanova, 8-9
Estonskaya SSR Sillamyae, 202010 (SU)**
Erfinder : **GURYANOV, Alexandr Sergeevich
ul. Komsomolskaya, 8-1
Estonskaya SSR Sillamyae, 202010 (SU)**
Erfinder : **KOZY, Fedor Ivanovich
pr. Sovetskoi Armii, 3-24
Kemerovskaya obl. Novokuznetsk, 654031
(SU)**
Erfinder : **GOSTEV, Grigory Grigorievich
pr. Zapsibovtsev, 96/39-22
Kemerovskaya obl. Novokuznetsk, 654054
(SU)**

(74) Vertreter : **Nix, Frank Arnold, Dr.
Kröckelbergstrasse 15
W-6200 Wiesbaden (DE)**

EP 0 302 123 B1

**Beschreibung**

Die vorliegende Erfindung bezieht sich auf Einrich-tungen zur Trennung von nicht mischbaren Flüssigkeiten mit unterschiedlichen spezifischen Gewichten und betrifft insbesondere einen Klärapparat für Flüssig-Flüssig-Extraktoren.

Bei Einrichtungen von diesem Typ wird die Trennung der Phasengemische in Entmischungszonen vorgenommen, die in eine der Phasen eingetaucht sind.

Zugrundeliegender Stand der Technik

Mit der Vergrösserung des Volumens der zu verarbeitenden Lösungen steigt auch der Bedarf an der Entwicklung von Extraktionsapparenten an, die bei einer begrenzten Aufstellfläche einen höheren spezifischen Volumendurchsatz der Klärapparate, d.h. eine höher auf das Nutzvolumen des Klärapparates bezogene Leistung haben.

Bei der Trennung von Phasengemischen steigt die Effektivität des Prozesses an, wenn das Einsatzvolumen des Phasengemisches in mehrere Schichten getrennt wird. Je kleiner dabei die Höhe einer Schicht ist, desto höher ist die Wirksamkeit. Bei der Durchführung der Entmischung in dünnen Schichten entsteht jedoch das Problem, ein optimales Verhältnis zwischen der Höhe der Schichten aus reinen Phasen und der Höhe der Schicht aus dem Phasengemisch in der Entmischungszone zu wählen, sowie das Problem, das Phasengemisch zwischen den Zonen gleichmässig zu verteilen und die aus den Zonen abzuleitenden Phasen an die gemeinsame Trenngrenze zu befördern.

Es ist ein Klärapparat für Flüssig-Flüssig-Extraktoren (US-A-3868335) bekannt, der ein Gehäuse mit Vorrichtungen zum Zuführen eines Phasengemisches und zum Abführen der getrennten reinen Phasen enthält. Innerhalb des Gehäuses befinden sich Entmischungszonen, die als kastenförmige Einrichtungen ausgeführt, übereinander unter Versetzung in Längs- und Querrichtung angeordnet und in eine der Phasen eingetaucht sind. Jede Einrichtung hat ein offenes Oberteil und einen geschlossenen Boden im Falle der Unterbringung der Einrichtungen in der Leichtphase und ein geschlossenes Oberteil und einen offenen Boden im Falle der Unterbringung der Einrichtungen in der Schwerphase. Jede Einrichtung hat auch vier senkrechte Seitenwände, von denen eine Wand mit einer Vorrichtung zum Zuführen des Mehrphasengemisches versehen ist. Gegenüber dieser Wand ist eine Vorrichtung zum Abführen einer der Phasen angeordnet, und zwischen dieser Vorrichtung und der Wand mit der Vorrichtung zum Abführen des Mehrphasengemisches ist eine Trennwand unter Belassen eines Spaltes relativ zu dem Boden oder dem Oberteil der Einrichtungen vorgesehen. Der Klärapparat hat eine senkrecht verlaufende Sammelleitung für das Mehrphasengemisch, an deren Seitenwand Vorrichtungen zum Abführen des Mehrphasengemisches angeschlossen sind.

Dieser Kläpparat hat jedoch keinen ausreichenden spezifischen Volumendurchsatz. Das ist darauf zurückzuführen, dass die kastenförmigen Einrichtungen über die Höhe der Kammer wesentlich zerstreut angeordnet sind und deren Versetzung relativ zueinander in Längs- und Querrichtung zu einer unzweckmässigen Ausnutzung des Volumes des Klärapparates sowie zu einer Vergrösserung seiner Aufstellfläche führt.

Die gegenläufige Bewegung der Leichtphase, der Schwerphase und ihres Gemisches ausserhalb der kastenförmigen Einrichtungen, welche durch konstruktive Besonderheiten der Zuführung des Phasengemisches in die Einrichtungen und der Abführung der getrennten Phasen bedingt ist, wirkt sich ebenfalls negativ auf den spezifischen Volumendurchsatz des Klärapparates und die Größe seiner Aufstellfläche aus.

Es ist auch ein Klärapparat für Flüssing-Flüssig-Extraktoren (US-A-3820954) bekannt, der ein Gehäuse mit Vorrichtungen zum Zuführen eines Phasengemisches, die als Rinnen ausgeführt sind, sowie Vorrichtungen zum Abführen der getrennten reinen Phasen enthält. Innerhalb des Gehäuses befinden sich Entmischungszonen, die als kastenförmige Einrichtungen ausgeführt sind, welche parallel übereinander unter Bildung eines Schlitzes zum Abführen einer der Phasen liegen. Jede der Einrichtungen hat ein offenes Oberteil oder einen Boden und dementsprechend einen geschlossenen Boden oder Oberteil und ist mit einer Vorrichtung zum Zuführen des Phasengemisches verbunden. Bei jeder kastenförmigen Einrichtung ist eine Wand nach aussen geneigt, wobei gegenüber dieser Wand eine Vorrichtung zum Abführen einer der Phasen angeorgnet ist, die nach innen in die Einrichtung hinein geneigt ist. Im Zwischenraum zwischen der Einrichtung zum Abführen einer der Phasen und der nach aussen geneigten Wand ist eine Trennwand vorgesehen, die sich von der benachbarten Einrichtung zu der abzuführenden Phase hin erstreckt und einen Spalt mit dem Boden oder mit dem Oberteil der vorliegenden Einrichtung bildet. Der Klärapparat hat eine senkrecht verlaufende Sammelleitung für das Phasengemisch, deren Seitenwand mit den Rinnen verbunden ist. Der Abstand der Böden der benachbarten kastenförmigen Einrichtungen voneinander setzt sich aus der Höhe der Wände und der Breite des Schlitzes zum Abführen einer der Phasen zusammen. Die nach aussen geneigte Wand kann einen Ausschnitt für das Überlaufen des Phasengemisches aufweisen.

Der bekannte Klärapparat hat jedoch einen nicht ausreichend hohen spezifischen Volumendurchsatz. Das ist einerseits dadurch bedingt, dass die kastenförmigen Einrichtungen über die Höhe der Kammer voneinander beträchtlich entfernt sind, wobei der Abstand der Böden der benachbarten Einrichtungen voneinander und folglich die Dicke der Schichten aus dem Phasengemisch und den geklärten Phasen in der Einrichtung beliebig gewählt worden ist und dem maximalen spezifischen Volumendurchsatz der Einrichtung und des Klärapparates im ganzen nicht entspricht. Andererseits wirkt auf den spezifischen Volumendurchsatz des Klärapparates die gegenläufige Bewegung der getrennten Phasen und des Phasengemisches ausserhalb der kastenförmigen Einrichtungen und insbesondere an der Phasengrenze des Klärapparates negativ ein, wo die Wechselwirkung der Phasen einen stossartigen Verlauf hat. Diese Bewegung führt zu einer Änderung der Dichte der Phase, in welche die Einrichtungen eingetaucht sind, zu einer sekundären Dispergierung und einem gegenseitigen Austragen von feindispersen Phasen. Im Ergebnis muss das Volumen des Klärapparates und folglich seine Aufstellfläche vergrössert werden.

Die Vorrichtung zum Zuführen des Phasengemisches gewährleistet ausserdem nicht die Verteilung des Phasengemisches in gleichen Volumen, wodurch ein Überlaufen des Phasengemisches von den höher liegenden Einrichtungen in die darunter angeordneten Einrichtungen stattfindet. Das Vorhandensein eines Ausschnittes in der nach aussen geneigten Wand der Einrichtung zur Gewährhleistung eines solchen Überlaufens kann zu einem Verlust der Schicht des Phasengemisches in der Einrichtung bei einer Abweichung der Stellung der Einrichtung von der Horizontallage führen. Der zuletzt genannte Nachteil zeigt sich in einem bedeutenden Maße bei der Verwendung von langgezogenen kastenförmigen Einrichtungen mit begrenzter Höhe.

Offenbarung der Erfindung

Der vorliegenden Erfindung liegt die Aufgabe zugrunde, einen Klärapparat für Flüssig-Flüssig-Extraktoren zu schaffen, dessen gerätetchnische Ausführung es gestattet, den Prozess der Phasentrennung ohne Vergrösserung der vom Klärapparat eingenommenen Produktionsfläche zu intensivieren.

Die gestellte Aufgabe wird dadurch gelöst, dass bei einem Klärapparat für Flüssig-Flüssig-Extraktoren, enthaltend ein Gehäuse, das eine Vorrichtung zum Zuführen eines Gemisches aus einer Leicht- und einer Schwerphase, Vorrichtungen zum Abführen der getrennten Leichtphase und Schwerphase aus dem Gehäuse sowie innerhalb des Gehäuses übereinander angeordnete kastenförmige Einrichtungen hat, von denen jede mit der Vorrichtung zum Zuführen des Phasengemisches verbunden ist und zusammen mit der benachbarten kastenförmigen Einrichtung einen Schlitz zum Abführen einer der Phasen in den Hohlraum des Gehäuses bildet, wobei bei jeder der kastenförmigen Einrichtungen eine Wand nach aussen geneigt ist und gegenüber dieser Wand an einer von der genannten Wand entfernten Stelle eine Vorrichtung zum Abführen einer der Phasen angeordnet ist, während im Zwischenraum zwischen der zuletzt genannten Vorrichtung und der nach aussen geneigten Wand unter Belassen eines Spaltes relativ zu dem Boden der kastenförmigen Einrichtung eine Trennwand vorgesehen ist, deren Ebene vorzugsweise senkrecht zu der Strömungsrichtung der durch den Spalt abzuführenden Phase liegt, erfindungsgemäss alle anderen Wände in jeder kastenförmigen Einrichtung nach aussen geneigt sind, und die kastenförmigen Einrichtungen selbst do angeordnet sind, dass der Abstand der Böden der benachbarten kastenförmigen Einrichtungen voneinander kleiner als die Höhe ihrer Wände ist, sowie dass jede Vorrichtung zum Abführen einer der Phasen vorzugsweise in Form eines senkrechten Kanals mit einer Querschnisttsfläche der Eintrittsöffnung ausgebildet ist, die grösser als die Querschnittsfläche der Austrittsöffnung ist, wobei der genannte Kanal mit einem Regelglied versehen ist und so verläuft, dass die Kanalwände durch den Boden der kastenförmigen Einrichtung geführt sind, und die Austrittsöffnung des vorzugsweise senkrecht verlaufenden Kanals vom Boden der kastenförmigen Einrichtung in einem grösseren Abstand als die Eintrittsöffnung dieses Kanals entfernt ist.

Dadurch, dass alle Wände der kastenförmigen Einrichtungen mit einer Neigung nach aussen ausgeführt und die kastenförmigen Einrichtungen so angeordnet sind, dass der Abstand der Böden der benachbarten Einrichtungen voneinander die Höhe der Wände derselben nicht übersteigt, kann ein Abstand der Böden voneinander gewährleistet werden, der einem maximalen Volumendurchstaz einer Einzeleinrichtung und des gesamten Klärapparates bei der vorgegebenen Höhe desselben entspricht.

Dadurch, dass die Vorrichtung zum Abführen einer der Phasen in Form eines vorzugsweise senkrecht verlaufenden Kanals mit einer Querschnittsfläche der Eintritt söffnung, dir grösser als die Querschnittsfläche der Austrittsöffnung ist, ausgebildet ist, sowie dank der vorgeschlagenen Anordnung des Kanals und dem Wordhandensein eines Regelgliedes darin kann die Abführung der schweren (leichten) Phase aus den kastenförmigen Einrichtungen gewährleistet werden, ohne dass diese Phase mit der Phase in Berührung tritt, in die die Einrichtungen eingetaucht sind, d.h., eine gegenläufige Bewegung der Phasen ausserhalb dieser Einrichtungen beseitigt werden. Im Ergebnis werden die sekundäre Dispergierung und der gegenseitige Phasenaustrag ausgeschlossen. All das trägt dazu bei, dass der spezifische Volumendurchsatz des Klärapparates erhöht wird.

Es ist zweckmässig, dass im Klärapparat eine Sammelleitung für das Phasengemisch vorgesehen ist, die oberhalb der Vorrichtung zum Abführen der Leichtphase aus dem Gehäuses zu liegen kommt, und die Vorrichtungen zum Zuführen des Phasengemisches mit dem Boden der Sammelleitung verbunden sind.

Dadurch wird es möglich, das Phasengemisch in die kastenförmigen Einrichtungen in gleichen Volumen zuzuführen, was ein Überlaufen des Phasengemisches von einer Einrichtung auf die andere Einrichtung aschliesst, den Betrieb einer Einzeleinrichtung und des Klärapparates im ganzen stabilisiert. Dabei wird eine gegenläufige Bewegung des Phasengemisches und der Phase beseitigt, in die die Einrichtung eingetaucht ist.

Es ist wünschenswert, dass der Abstand h der Böden der benachbarten kastenförmigen Einrichtungen voneinander aus der Beziehung

$$h = h_m + (kh_m)^2$$

ermittelt wird, worin
$h_m$ - Schichthöhe des Phasengemisches in der Einrichtung, (m),
$K$ - Erfahrungszahl, $(m^{-\frac{1}{2}})$
bedeuten.

Der Wert der Erfahrungszahl "k" ist von der Dichte der Phasen, deren dynamischer Viskosität, der Grenzflächenspannung und dem Tropfendurchmesser der dispersen Phase abhängig und liegt in einem Bereich von 3 bis 5. Die Werte der Erfahrungszahl "k", die der unteren Grenze nahe liegen, entsprechen dabei den leicht entmischbaren Phasengemischen, und die der oberen Grenze nahe liegenden Werte entsprechen den schwer entmischbaren Phasengemischen. Zur Gewährleistung eines hohen spezifischen Volumendurchsatzes des Klärapparates darf die Schichthöhe des Phasengemisches in der kastenförmigen Einrichtung 80 bis 100 mm nicht überschreiten.

Die Wahl des Abstandes zwischen den Böden der Einrichtungen gemäss der vorgeschlagenen Abhängigkeit gestattet es, ein optimales Verhältnis zwischen der Schichthöhe des Phasengemisches und der Schicht der getrennten Phasen in jeder Einrichtung hinsichtlich der Erhaltung eines maximalen spezifischen Volumendurchsatzes zu gewährleisten.

Es ist möglich, dass der Kanal zum Abführen einer der Phasen in Form eines Kegelstumpfes ausgebildet ist.

Bei einer solchen Ausführung des Kanals kann der Austrittquerschnitt jedes Kanals wirksamer geregelt, die gegenseitige Verbindung der kastenförmigen Einrichtungen innerhalb des Gehäuses vereinfacht sowie die Fertigungsgerechtheit der genannten Einrichtungen erhöht werden.

Es ist wünschenswert, dass in der kastenförmigen Einrichtungen die vorzugsweise senkrecht verlaufenden Kanäle koaxial an der senkrechten Achse entlang zu liegen kommen, wobei die Wände des vorzugsweise senkrecht verlaufenden Kanals der nachfolgenden kastenförmigen Einrichtung die Wände des vorzugsweise senkrecht verlaufenden Kanals der vorhergehenden kastenförmigen Einrichtung umfassen.

Eine solche Anordnung der Kanäle gestattet es, eine gegenseitig abgestimmte Regelung der Querschnittsfläche der Austrittsöffnungen der Kanäle verschiedener kastenförmiger Einrichtungen zu verwirklichen.

Es ist zweckmässig, dass jedes Regelglied in Form einer Scheibe ausgebildet ist, die in der Austrittsöffnung jedes vorzugsweise senkrecht verlaufenden Kanals angeordnet ist, und dass der Aussendurchmesser jeder nachfolgenden Scheibe in der Strömungsrichtung der abzuführenden Phase abnimmt, wobei alle Scheiben an einer senkrechten Stange befestigt sind.

Eine solche Ausführungsform und Anordnung des Regelgliedes gestatten es, die Abführung der schweren (leichten) Phase aus allen kastenförmigen Einrichtungen an die Phasengrenze des Klärapparates unter Vergrösserung des Volumens der abzuführenden Phase von Einrichtung zu Einrichtung zu gewährleisten. Ausserdem wird dadurch die Auffüllung der Kanäle mit der abzuführenden Phase in dem eingestellten Betriebszustand gewährleistet, was zu einer Erhöhung des spezifischen Volumendurchsatzes beiträgt.

Es ist wünschenswert, dass die vorzugsweise senkrecht verlaufenden Kanäle der benachbarten kastenförmigen Einrichtungen an den parallelen senkrechten Achsen entlang gelegen sind, wobei die vorzugsweise senkrecht verlaufenden
Kanäle jeder zweiten kastenförmigen Einrichtung koaxial liegen.

Durch eine solche Anordnung der vorzugsweise senkrecht verlaufenden benachbarten Kanäle der kastenförmigen Einrichtungen wird die Herstellung und die Montage derselben vereinfacht und die Zuverläßigkeit der Einrichtung erhöht.

Es ist möglich, dass jedes Regelglied einen Ring darstellt, der in der Austrittsöffnung des vorzugsweise senkrecht verlaufenden Kanals angeordnet ist, wobei der Innendurchmesser jedes nachfolgenden Rings in der Strömungsrichtung der abzuführenden Phase zunimmt.

Es ist auch möglich, das jedes Regelglied in Form eines Bechers mit Öffnungen in der Seitenwand ausgebildet ist, der mit der Austrittsöffnung des zugehörigen vorzdugsweise senkrechten Kanals verbunden ist, wobei bei jedem in der Strömungsrichtung der abzuführenden Phase nachfolgenden Becher die Gesamtquerschnittsfläche der Öffnungen grösser als beim vorhergehenden Becher ist.

Eine solche Ausführung des Regelgliedes gestattet es, die Abführung der schweren (1 eichten) Phase aus allen kastenförmigen Einrichtungen an die Phasengrenze des Klärapparates bei einer Vergrösserung des Volumens der abzuführenden Phase von Einrichtung zu Einrichtung zu gewährleisten. Eine solche Ausführung des Regelgliedes gestattet es ausserdem, die Kanäle zum Abführen der Phasen sowohl an einen, als auch an zwei senkrechten Achsen entlang zu verlegen.

Kurze Beschreibung der Zeichnungen

Andere Ziele und Vorteile der Erfindung werden nachstehend anhand eines konkreten Ausführungsbeispiels der Erfindung und der Zeichnungen näher erläutert. Es zeigen:

Fig. 1 - in schematischer Darstellung einen erfindungsgemässen Klärapparat mit in leichte Phase eingetauchten kastenförmigen Einrichtungen, Seitenansicht ;

Fig. 2 - den Schnitt nach der Linie II-II in Fig. 1;

Fig. 3 - den Schnitt nach der Linie III-III in Fig. 1;

Fig. 4 - den Schnitt nach der Linie IV-IV in Fig. 1, eine Ausführungsvariante des Regelgliedes ohne Stange in Form eines Bechers;

Fig. 5 - eine Ausführungsvariante des Regelgliedes ohne Stange in Form eines Rings;

Fig. 6 - in schematischer Darstellung einen erfindungsgemässen Klärapparat mit in schwere Phase eingetauchten kastenförmigen Einrichtungen, Seitenansicht;

Fig. 7 - den Schnitt nach der Linie VII-VII in Fig. 6.

Bevorzugte Ausführungsvariante der Erfindung

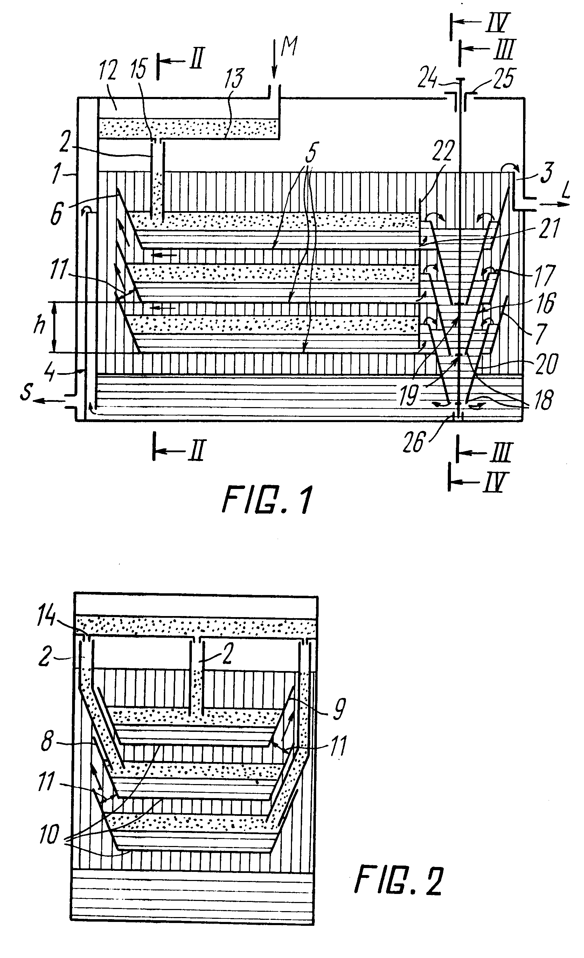

Der Klärapparat für Flüssig-Flüssig-Extraktoren enthält ein Gehäuse 1 (Fig. 1), in dem Vorrichtungen zum Zuführen eines Gemisches M aus einer leichten und einer schweren Phase, welche in Form von Rohrleitungen 2 mit einem gleichen Innendurchmesser ausgebildet sind, sowie Vorrichtungen 3, 4 zum Abführen von jeweils der leichten und der schweren Phasen L und S aus dem Gehäuse 1 untergebracht sind. Innerhalb des Gehäuses 1 sind übereinander identische kastenförmige Einrichtungen 5 angeordnet, die in die leichte Phase L eingetaucht sind; diese Einrichtungen haben Wände 6, 7, 8, 9 und Böden 10. Die Wände 6, 7, 8, 9 jeder kastenförmigen Einrichtung 5 sind mit einer Neigung nach aussen ausgeführt, und im Zwischenraum zwischen den Seitenflächen der Wände 6 bis 9 der benachbarten Einrichtungen 5 ist ein Schlitz 11 zum Abführen einer der Phasen aus jeder der kastenförmigen Einrichtung 5 vorgesehen. Die kastenförmigen Einrichtungen 5 sind so angeordnet, dass der Abstand h der Böden 10 zweier benachbarter Einrichtungen 5 voneinander kleiner als die Höle der Wände 6, 7, 8, 9 ist.

Der Abstand h wird in Abhängigkeit von der Durchsatzleistung des Klärapparates und den physikalisch-chemischen Eigen schaften der Phasen gemäss der Beziehung:

$$h = h_m + (kh_m)^2$$

ermittelt, worin

$h_m$ - Schichthöhe des Phasengemisches in der Einrichtung (m) ;

$k$ - Erfahrungszahl, $(m^{-1/2})$

bedeuten.

Die Breite des Schlitzes 11 zum Abführen der leichten Phase L wird so gewählt, dass sie 0,25 bis 0,5 des Abstandes h beträgt.

Innerhalb des Gehäuses 1 ist eine Sammelleitung 12 für das Phasengemisch M vorgesehen, die waagerecht oberhalb der Vorrichtung 3 zum Abführen der leichten Phase L aus dem Gehäuse 1 gelegen ist. Im Boden 13 der Sammelleitung 12 sind gleiche Stutzen 14 (Fig. 2) vorgesehen. Jede Rohrleitung 2 ist durch ihr eines Ende mit dem Boden 13 über eine Stutzen 14 verbunden, der in die Rohrleitung unter Bildung eines Spaltes 15 (Fig. 1) hineingeht. Das andere Ende jeder Rohrleitung 2 ist mit der kastenförmigen Einrichtung 5 verbunden.

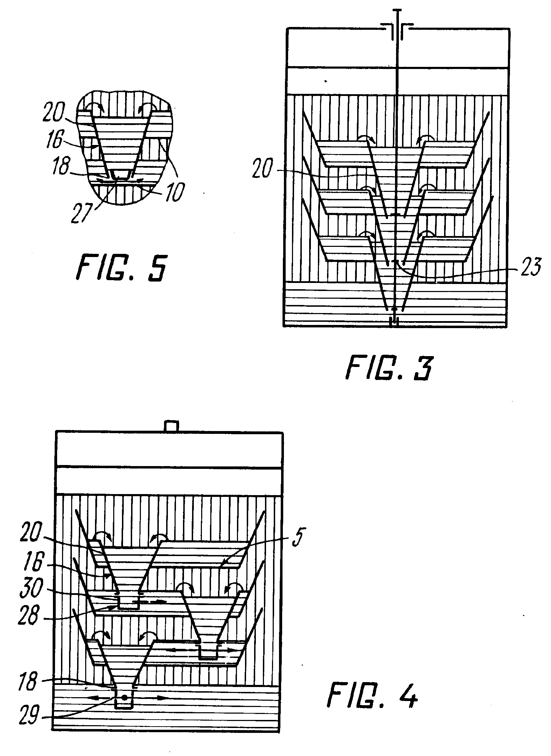

In jeder Einrichtung 5 ist in der Nähe der Wand 7 eine Vorrichtung zum Abführen einer der Phasen vorgesehen, die in Form eines vorzugsweise senkrechten Kanals 16 (Fig. 1, 3) mit einer Querschnittsfläche der Eintrittsöffnung 17 ausgebildet ist, die grösser als die Querschnittsfläche der Austrittsöffnung 18 ist. Insbesondere kann der senkrechte Kanal 16 in Form eines Kegelstumpfes ausgebildet werden. Der senkrechte Kanal 16 ist mit einem Regelglied 19 versehen und im Boden 10 der Einrichtung 5 so angeordnet, dass die Wände 20 des Kanals 16 durch den Boden 10 geführt sind. Dabei ist die Austrittsöffnung 18 des Kanals 16 der betrachteten Einrichtung 5 von ihrem Boden 10 um einen Abstand entfernt, der grösser als die Eintrittsöffnung 17 des Kanals 16 der in der Strömungsrichtung der abzuführenden schweren Phase S nachfolgenden Einrichtung 5 ist.

In der Einrichtung 5 ist im Zwischenraum zwischen der Wand 6 und den Kanal 16 eine Trennwand 22 unter Belassen eines Spaltes 21 relativ zu dem Boden 10 angeordnet. Die Ebene der Trennwand 22 liegt vorzugsweise senkrecht zu der Strömungsrichtung der durch den Spalt 21 abzuführenden schweren Phasen S.

In den kastenförmigen Einrichtungen 5 sind die Kanäle 16 koaxial an einer senkrechten Achse entlang so gelegen, dass die Wände 20 der Kanäle 16 der benachbarten Einrichtungen 5 einander teilweise umfassen.

Jedes Regelglied 19 ist in Form einer Scheibe 23 ausgebildet, die in der Austrittsöffnung (18) jedes Kanals 16 (Fig. 3) untergebracht ist. Die Stange 24, an der die Scheiben 23 befestigt sind, hat Führungen 25, 26 und ist in den Kanälen so angeordnet, dass sich die Scheiben 23 in den Austrittsöffnungen 18 der Kanäle 16 unter Belassen eines Spaltes gegenüber den Wänden 20 derselben befinden. Dabei nimmt der Aussendurchmesser der Scheiben 23 in der Strömungsrichtung der abzuführenden schweren Phase S ab.

In den kastenförmigen Einrichtungen 5 (Fig. 4) sind die Kanäle 16 entlang paralleler senkrechter Achsen geführt. In diesem Fall sind die Kanäle 16 jeder zweiten kastenförmigen Einrichtungen 5 koaxial.

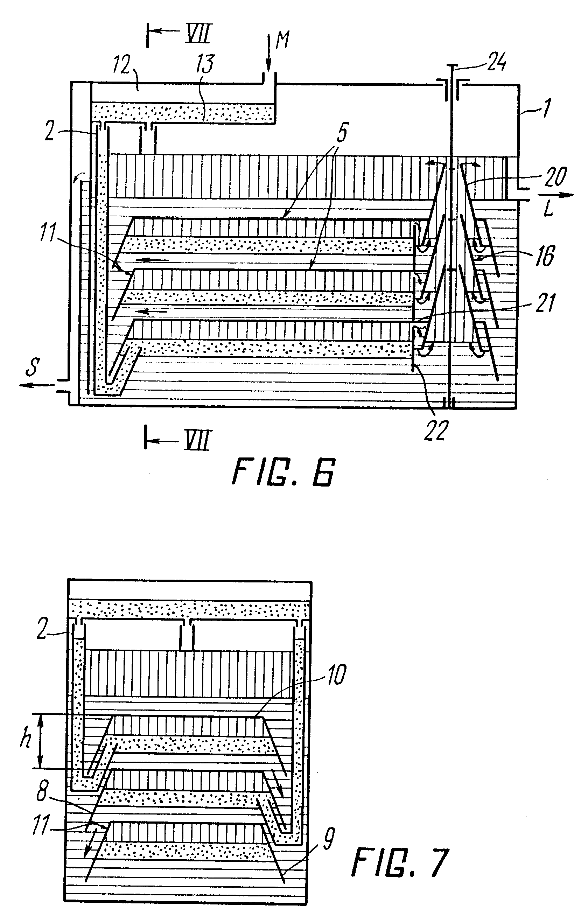

Das Regelglied kann in Form eines Rings 27 (Fig. 5) ausgebildet werden, der sich in der Austrittsöffnung 18 jedes Kanals 16 befindet. Dabei nimmt der Innendurchmesser der Ringe 27 in der Strömungsrichtung der abzuführenden schweren Phase S zu.

Das Regelglied kann auch in Form eines Bechers 28 (Fig. 4) mit Öffnungen 29 in der Seitenwand 30 ausgebildet werden. Der Becher 28 ist mit der Austrittsöffnung 18 jedes Kanals 16 verbunden. Die Gesamtquerschnittsfläche der Öffnungen 29 jedes Bechers 28 nimmt von Kanal zu Kanal in der Strömungsrichtung der abzuführenden schweren Phase S zu.

Im Klärapparat für Flüssig-Flüssig-Extraktoren, der in Fig. 6 und 7 dargestellt ist, sind die kastenförmigen Einrichtungen in die schwere Phase S eingetaucht. In diesem Fall hat der Klärapparat einen dem oben beschriebenen ähnlichen Aufbau. Eine Ausnahme besteht dabei darin, dass die Böden 10 der Einrichtungen 5 dem Oberteil des Gehäuses 1 zugewandt sind. Dabei wird durch die Kanäle 16 in das Gehäuse 1 hinein die leichte Phase L abgeführt.

Der erfindungsgemässe Klärapparat für Flüssig-Flüssig-Extraktoren hat folgende Wirkungsweise.

Das zu Einrichtung bestimmte Phasengemisch M wird aus der Sammelleitung 12 für Phasengemisch (Fig. 1 bis 3) über die Stutzen 14 und die Rohrleitung 2 in jede kastenförmige Einrichtung 5 zugeführt. Die gleichen Volumen des Phasengemisches M werden in die Einrichtungen 5 an der Phasengrenze eingeführt und relativ zu dieser als Schichten verteilt. Die Höhe $h_m$ einer Schicht des Phasengemisches ist in jeder Einrichtung 5 im stationären Betriebszustand konstant. Bei der Strömung des Phasengemisches M in der Längsrichtung der Einrichtungen 5 wird dieses in eine leichte Phase L und eine schwere Phase S getrennt. Die leichte Phase L wird über die Schlitze 11 aus den Einrichtungen 5 in das Gehäuse 1 hinein in die umgebende leichte Phase L abgeführt. Die schwere Phase wird über den Spalt 21 und die Eintrittsöffnung 17 in den Hohlraum des Kanals 16 zugeführt, der im stationären Betriebszustand mit der schweren Phase S ständig gefüllt ist. Über den zwischen der Scheibe 23 und der Wand 20 des Kanals 16 bestehenden Spalt wird die schwere Phase S in den Hohlraum des Kanals 16 der darunter liegenden Einrichtung 5 usw. zugeführt; bis sie ausserhalb der Einrichtung 5 unterhalb der Phasengrenze im Klärapparat in das Gesamtvolumen der schweren Phase S eintritt. Aus den Gehäuse 1 wird die getrennte schwere Phase S über die Vorrichtung 4 zum Abführen der schweren Phase und die leichte Phase L - über die Vorrichtungen 3 zum Abführen der leichten Phase abgeführt.

Die Kanäle 16 können in den kastenförmigen Einrichtungen 5 an zwei senkrechten Achsen entlang zu liegen kommen und das Regelglied 19 kann in Form eines Bechers 28 (Fig. 4) mit Öffnungen 29 ausgebildet werden.

In diesem Fall wird die schwere Phase aus dem Kanal 16 der vorhergehenden Einrichtung 5 über die Öffnungen 29 des Bechers 28 in den Kanal 16 (Fig. 1) der nachfolgenden Einrichtung 5 durch die Zone der nachfolgenden Einrichtung 5 zugeführt, die im Zwischenraum zwischen der Trennwand 22, der Wand 7 und den Wänden 8, 9 besteht. Im stationären Betriebszustand ist diese Zone ständig mit der schweren Phase S in der Standhöhe der Eintrittsöffnung 17 des Kanals 16 gefüllt.

Wenn die kastenförmigen Einrichtungen 5 (Fig. 6, 7) in die schwere Phase S eingetauch sind, läuft der Prozess ähnich ab. Dabei wird lediglich über die Schlitze 11 der Einrichtungen 5 die schwere Phase S und über die Kanäle 16 - die leichte Phase L abgeführt. Die Phasengrenze wird im Klärapparat im Oberteil des Gehäuses 1 liegen.

Das Wesen des erfindungsgemässen Klärapparates für Flüssig-Flüssig-Extraktoren kann am Beispiel der Entmischung eines Phasengemisches erläutert werden, das bei der Extraktionstrennung von Seltenerdmetalnitraten durch Tributylphosphat (Fig. 1 bis 3) entstanden ist.

Beispeil

Der Volumendurchsatz des Klärapparates beträgt bezogen auf das Phasengemisch 10 m³/h bei einem Verhältnis der leichten und der schweren Phase L, S zueinander in der Beschickung des Extraktors von 1:1. Die spezifische Grenzbelastung pro Flächeneinheit der kastenförmigen Einrichtung 5 wurde gleich 2,5 m$^3$/h·m$^2$ und der Wert der Erfahrungszahl K gleich 4 m$^{-\frac{1}{2}}$ genommen. Die Höhe h$_m$ einer Schicht des Phasengemisches M in den Einrichtungen 5 wurde gleich 0,06 m genommen. Der Abstand h der Böden 10 der benachbarten Einrichtungen 5 voneinander beträgt in Übereinstimmung mit den vorgeschlagenen Verhältnis 0,12 m. Die Höhe der im Klärapparat ein- gefüllten Flüssigkeit beträgt 2,1 m, und die Gesamthöhe der kastenförmigen Einrichtungen 5 - 1,8m. Die Anzahl der Einrichtungen 5 ist gleich 15 Stück. Die Fläche des Bodens 10 einer Einzeleinrichtung 5 beträgt unter Berücksichtigung der von Kanal 16 eingenommenen Fläche 0,77 m$^2$. Die von gesamten Klärapparat eingenommene Fläche beträgt 0,95 m$^2$. Der spezifische Volumen durchsatz einer Einzeleinrichtung sowie der Gesamtheit von Einrichtungen beträgt 7,2 m$^3$/h·m$^2$, während der spezifische Volumendurchsatz des Klärapparates 5 m$^3$/h· m$^3$ beträgt.

Der erfindungsgemässe Klärapparat gestattet es im Vergleich zu den bekannten Klärapparaten, den Abstand h der Böden der benachbarten kastenförmigen Einrichtungen voneinander um das 2,5 fache zu vermindern, wobei der spezifische Volumendurchsatz einer Einzeleinrichtung um das 1,8-fache und der des Klärapparates im ganzen um das 2,9-fache ansteigt. Die vom Klärapparat eingenommene Fläche vermindert sich um das 3fache.

## Gewerbliche Anwendbarkeit

Die Erfindung kann in der Chemieindustrie, Petrolchemie und im Hüttenwesen zur Durchführung der Prozesse der Flüssig-Flüssig-Extraktion ihre Anwendung finden.

Besonders wirksam kann die vorliegende Erfindung zur Trennung von Seltenerdmetallen, Buntmetallen sowie zur Extraktion von Eisen(III)-chlorid aus im Hüttenwesen anfallenden salzauren Beizflüssigkeiten verwendet werden.

## Patentansprüche

1. Klärapparat für Flüssig-Flüssig-Extraktoren, enthaltend ein Gehäuse (1), das eine Vorrichtung zum Zuführen eines Gemisches (M) aus einer Leicht- und einer Schwerphase, Vorrichtungen (3, 4) zum Abführen der getrennten Leichtund Schwerphasen (L und S) aus dem Gehäuse sowie innerhalb des Gehäuses (1) übereinander angeordnete kastenförmige Einrichtungen (5) hat, von denen jede mit der Vorrichtung zum Zuführen des Gemisches (M) aus der leichten und der schweren Phase verbunden ist und zusammen mit der benachbarten kastenförmigen Einrichtung (5) einen Schlitz (11) zum Abführen einer der Phasen in den Hohlraum des Gehäuses (1) bildet,
wobei bei jeder der kastenförmigen Einrichtungen eine Wand (6) nach außen geneigt ist und gegenüber dieser Wand (6) an einer von der genannten Wand (6) entfernten Stelle eine Vorrichtung zum Abführen einer der Phasen angeordnet ist, während im Zwischenraum zwischen der zuletzt genannten Vorrichtung und der nach außen geneigten Wand (6) unter Belassen eines Spaltes (21) relativ zu dem Boden (10) der kastenförmigen Einrichtung (5) eine Trennwand (22) vorgesehen ist, deren Ebene vorzugsweise senkrecht zu der Strömungsrichtung der durch den Spalt (21) abzuführenden Phase liegt,
dadurch gekennzeichnet, daß alle anderen Wände (7, 8, 9) jeder kastenförmigen Einrichtung (5) nach außen geneigt sind, und die kastenförmigen Einrichtungen (5) selbst so angeordnet sind, daß der Abstand (h) der Böden (10) der benachbarten kastenförmigen Einrichtungen (5) voneinander kleiner als die Höhe ihrer Wände (6, 7, 8, 9) ist,
sowie dadurch, daß jede Vorrichtung zum Abführen einer der Phasen vorzugsweise in Form eines senkrechten Kanals (16) mit einer Querschnittsfläche der Eintrittsöffnung (17) ausgebildet ist, die größer als die Querschnittsfläche der Austrittsöffnung (18) ist,
wobei der genannte Kanal mit einem Regelglied (19) versehen und so angeordnet ist, daß die Wände (20) dieses Kanals (16) durch den Boden der kastenförmigen Einrichtung (5) geführt sind, und die Austrittsöffnung (18) des vorzugsweise senkrecht verlaufenden Kanals (16) vom Boden (10) der kastenförmigen Einrichtung in einem größeren Abstand als die Eintrittsöffnung (17) dieses Kanals (16) entfernt ist.

2. Klärapparat für Flüssig-Flüssig-Extraktoren nach Anspruch 1, dadurch gekennzeichnet, daß in diesem eine Sammelleitung (12) für das Gemisch (M) aus einer leichten und einer schweren Phase vorgesehen ist, die oberhalb der Vorrichtung (3) zum Abführen der Leichtphase (L) aus dem Gehäuse (1) angeordnet ist, wobei die Vorrichtung zum Zuführen des Gemisches (M) aus der leichten und der schweren Phase mit dem Boden der Sammelleitung (12) verbunden ist.

3. Klärapparat für Flüssig-Flüssig-Extraktoren nach Anspruch 1 oder 2, dadurch gekennzeichnet, daß der Abstand (h) der Böden (10) der benachbarten kastenförmigen Einrichtungen (5) voneinander aus der Beziehung

$$h = h_m + (kh_m)^2$$

ermittelt wird, worin

$h_m$ - Schichthöhe des Phasengemisches (M) in jeder kastenförmigen Einrichtung, (m);
k - Erfahrungszahl von k = 3 bis 5, $(m^{-1/2})$
beteuden.

4. Klärapparat fair Flüssig-Flüssig-Extraktoren nach einem der Ansprüche 1 bis 3, dadurch gekennzeichnet, daß der vorzugsweise senkrecht verlaufende Kanal (16) in Form eines Kegelstumpfes ausgebildet ist.

5. Klärapparat für Flüssig-Flüssig-Extraktoren nach einem der Ansprüche 1 oder 4, dadurch gekennzeichnet, daß in den kastenförmigen Einrichtungen (5) die vorzugsweise senkrecht verlaufenden Kanäle (16) koaxial einer senkrechten Achse entlang gelegen sind, wobei die Wände (20) des vorzugsweise senkrecht verlaufenden Kanals (16) der nachfolgenden kastenförmigen Einrichtung (5) die Wände (20) des vorzugsweise senkrecht verlaufenden Kanals (16) der vorhergehenden kastenförmigen Einrichtung (5) umfassen.

6. Klärapparat für Flüssig-Flüssig-Extraktoren nach einem der Ansprüche 1, 4 oder 5, dadurch gekennzeichnet, daß jedes Regelglied (19) in Form einer Scheibe (23) ausgebildet ist, die in der Austrittsöffnung (18) jedes vorzugsweise senkrecht verlaufenden Kanals (16) angeordnet ist, und daß der Außendurchmesser jeder nachfolgenden Scheibe (23) in der Strömungsrichtung der abzuführenden Phase abnimmt, wobei alle Scheiben (23) an einer senkrechten Stange (24) befestigt sind.

7. Klärapparat für Flüssig-Flüssig-Extraktoren nach Anspruch 4, dadurch gekennzeichnet, daß die vorzugsweise senkrecht verlaufenden Kanäle (16) der benachbarten kastenförmigen Einrichtungen (5) parallelen senkrechten Achsen entlang gelegen sind, wobei die vorzugsweise senkrecht verlaufenden Kanäle (16) jeder zweiten kastenförmigen Einrichtung (5) koaxial liegen.

8. Klärapparat für Flüssig-Flüssig-Extraktoren nach Anspruch 7, dadurch gekennzeichnet, daß jedes Regelglied (19) einen Ring (27) darstellt, der in der Austrittsöffnung (18) des vorzugsweise senkrecht verlaufenden Kanals angeordnet ist, wobei der Innendurchmesser jedes nachfolgenden Rings (27) in der Strömungsrichtung der abzuführenden Phase zunimmt.

9. Klärapparat für Flüssig-Flüssig-Extraktoren nach Anspruch 7, dadurch gekennzeichnet, daß jedes Regelglied (19) in Form eines Bechers (28) mit Öffnungen (29) in der Seitenwand (30) ausgebildet ist, der mit der Austrittsöffnung (18) des zugehörigen vorzugsweise senkrecht verlaufenden Kanals (16) verbunden ist, wobei bei jedem in der Strömungsrichtung der abzuführenden Phase nachfolgenden Becher (28) die Gesamtquerschnittsfläche der Öffnungen (29) größer als beim vorhergehenden Becher (28) ist.

## Claims

1. Clarifying apparatus for liquid-liquid extractors, containing a casing (1) which has a facility for supplying a mixture (M) of a light and a heavy phase, facilities (3, 4) for removing the separated light phase and heavy phase (L and H) from the casing and also box-type devices (5) arranged above one another inside the casing (1),
each of which devices is connected to the facility for supplying the mixture (M) of the light and the heavy phase and forms, together with the adjacent box-type device (5), a slit (11) for removing one of the phases into the cavity of the casing (1), each of the box-type devices having one wall (6) inclined outwards and a facility for removing one of the phases being arranged opposite this wall (6) at a location remote from said wall (6), whilst a partition (22) is provided in the space between the last-mentioned facility and the outwardly inclined wall (6), leaving a gap (21) relative to the base (10) of the box-type device (5), the plane of said partition (22) preferably being perpendicular to the direction of flow of the phase to be removed through the gap (21),
characterised in that all other walls (7, 8, 9) of each box-type device (5) are inclined outwards and the boxtype devices (5) themselves are so arranged that the spacing (h) between the bases (10) of the adjacent box-type devices (5) is less than the height of their walls (6, 7, 8, 9),
and in that each facility for removing one of the phases is preferably constructed as a vertical channel (16) which has a cross-sectional area of the inlet orifice (17) which is greater than the cross-sectional area of the outlet orifice (18),
said channel being provided with a control element (19) and arranged in such a way that the walls (20) of this channel (16) are passed through the base of the box-type device (5), and the outlet orifice (18) of the preferably vertical channel (16) is at a greater distance from the base (10) of the box-type device than is the inlet orifice (17) of this channel (16).

2. Clarifying apparatus for liquid-liquid extractors according to Claim 1, characterised in that a collection

EP 0 302 123 B1

line (12) is provided in said apparatus for the mixture (M) of a light and a heavy phase, which line is arranged above the facility (3) for removing the light phase (L) from the casing (1), the facility for supplying the mixture (M) of the light and the heavy phase being connected to the base of the collection line (12).

3. Clarifying apparatus for liquid-liquid extractors according to Claim 1 or 2, characterised in that the spacing (h) between the bases (10) of the adjacent boxtype devices (5) is determined from the equation

$$h = h_m + (kh_m)^2$$

wherein

$h_m$ denotes the layer height of the phase mixture (M) in each box-type device, (m); and
k denotes an empirical number of k = 3 to 5, $(m^{-\frac{1}{2}})$.

4. Clarifying apparatus for liquid-liquid extractors according to one of Claims 1 to 3, characterised in that the preferably vertical channel (16) is constructed in the form of a truncated cone.

5. Clarifying apparatus for liquid-liquid extractors according to either of Claims 1 or 4, characterised in that the preferably vertical channels (16) in the boxtype devices (5) are located coaxially along a vertical axis, the walls (20) of the preferably vertical channel (16) of the dowstream box-type device (5) enclosing the walls (20) of the preferably vertical channel (16) of the upstream box-type device (5).

6. Clarifying apparatus for liquid-liquid extractors according to one of Claims 1, 4 or 5, characterised in that each control element (19) is constructed in the form of a disc (23) which is arranged in the outlet orifice (18) of each preferably vertical channel (16) and in that the external diameter of each subsequent disc (23) decreases in the direction of flow of the phase to be removed, all discs (23) being fixed to a vertical rod (24).

7. Clarifying apparatus for liquid-liquid extractors according to Claim 4, characterised in that the preferably vertical channels (16) of the adjacent box-type devices (5) are located along parallel vertical axes, the preferably vertical channels (16) of every second boxtype device (5) being located coaxially.

8. Clarifying apparatus for liquid-liquid extractors according to Claim 7, characterised in that each control element (19) represents a ring (27), which is arranged in the outlet orifice (18) of the preferably vertical channel, the internal diameter of each subsequent ring (27) increasing in the direction of flow of the phase to be removed.

9. Clarifying apparatus for liquid-liquid extractors according to Claim 7, characterised in that each control element (19) is constructed in the form of a cup (28) with orifices (29) in the side wall (30), which cup is connected to the outlet orifice (18) of the associated preferably vertical channel (16), the total crosssectional area of the orifices (29) of each subsequent cup (28) in the direction of flow of the phase to be removed being greater than that of the upstream cup (28).


**Revendications**

1. Décanteur pour extracteurs liquide-liquide, contenant un boîtier (1) qui a un dispositif pour l'amenée d'un mélange (M) formé d'une phase légère et d'une phase lourde, des dispositifs (3, 4) pour le départ des phases légère et lourde séparées (L et S) hors du boîtier,ainsi que des systèmes (5) en forme de boîte agencés les uns au-dessus des autres, à l'intérieur du boîtier (1),dont chacun est relié au dispositif pour l'amenée du mélange (M) formé des phases légère et lourde et formant,avec le système voisin (5) en forme de boîte, une fente (11) pour le départ de l'une des phases dans la cavité du boîtier (1),
où, dans le cas de chacun des systèmes en forme de boîte , une paroi (6) est inclinée vers l'extérieur et face à cette paroi, un dispositif est agencé, à un emplacement éloigné de ladite paroi (6) , pour le départ de l'une des phases tandis que dans l'espace entre le dernier dispositif nommé et la paroi inclinée vers l'extérieur (6) est prévue une paroi de séparation (22) laissant une fente (21) relativement au fond (10) du système (5) en forme de boîte, dont le plan est avantageusement perpendiculaire à la direction d'écoulement de la phase à évacuer à travers la fente (21),
caractérisé en ce que toutes les autres parois (7, 8, 9) de chaque système (5) en forme de boîte, sont iinclinées vers l'extérieur et en ce que les systèmes (5) en forme de boîte sont eux-mêmes agencés de manière que la distance (h) des fonds (10) de systèmes voisins en forme de boîte (5) soit plus petite que la hauteur de leurs parois (6, 7, 8, 9),
en ce que chaque dispositif pour le départ de l'une des phases est avantageusement configuré comme un canal vertical (16) avec une surface en section transversale de son ouverture d'entrée (17) qui est plus grande que la surface en section transversale de son ouverture de sortie (18),
ledit canal étant pourvu d'un organe de réglage (19) et étant agencé de manière que les parois (20) de ce canal (16) soient guidées à travers le fond du système (5) en forme de boîte et que l'ouverture de sortie (18) du canal avantageusement vertical (16) soit éloignée du fond (10) du système en forme de boîte d'une plus grande distance que l'ouverture d'entrée (17) de ce canal (16).

2. Décanteur pour extracteurs liquide-liquide selon la revendication 1, caractérisé en ce que,dans celui-ci,

9

un conduit collecteur (12) du mélange (M) formé d'une phase légère et d'une phase lourde est prévu, qui est agencé au-dessus du dispositif (3) pour l'évacuation de la phase légère (L) hors du boîtier (1), le dispositif pour l'introduction du mélange (M) formé des phases légère et lourde, étant relié au fond du conduit collecteur (12).

3. Décanteur pour extracteurs liquide-liquide selon la revendication 1 ou 2, caractérisé en ce que la distance (h) des fonds (10) de systèmes voisins en forme de boîte (5) peut être obtenue à partir de la relation :

$$h = h_m + (kh_m)^2$$

dans laquelle

$h_m$ : hauteur de couche du mélange de phases (M) dans chaque système en forme de boîte, (m) ;

$k$ : nombre empirique de k = 3 à 5 $(m^{-1/2})$.

4. Décanteur pour extracteurs liduide-liquide selon l'une quelconque des revendications 1 à 3, caractérisé en ce que le canal (16),passant avantageusement verticalement, est configuré en tronc de cône.

5. Décanteur pour extracteurs liquide-liquide selon l'une quelconque des revendications 1 à 4, caractérisé en ce que,dans les systèmes (5)en forme de boîte, les canaux avantageusement verticaux (16) sont placés coaxialement à un axe vertical, et les parois (20) du canal avantageusement vertical (16) du système voisin en forme de boîte (5) entourent les parois (20) du canal avantageusement vertical (16) du système en forme de boîte (5) qui précède.

6. Décanteur pour extracteurs liquide-liquide selon l'une quelconque des revendications 1, 4 ou 5, caractérisé en ce que chaque organe de réglage (19) a la forme d'un disque (23) qui est agencé dans l'ouverture de sortie (18) de chaque canal passant aventeusement verticalement (16) et en ce que le diamètre externe de chaque disque successif (23), dans la direction d'écoude la phase à évacuer, diminue, tous les disques (23) étant fixés à une tige verticale (24).

7. Décanteur pour extracteurs liquide-liquide selon la revendication 4, caractérisé en ce que les canaux avantageusement verticaux (16) de systèmes voisins (5) en forme de boîte sont placés parallèlement à des axes verticaux, et les canaux passant avantageusement verticalement (16) d'un système en forme de boîte (5) sur deux sont coaxiaux.

8. Décanteur pour extracteurs liquide-liquide selon la revendication 7, caractérisé en ce que chaque organe de réglage (19) est représenté par une bague (27) qui est agencée dans l'ouverture de sortie (18) du canal avantageusement vertical, et le diamètre interne de chaque bague (27) successive, en direction d'écoulement de la phase à évacuer, augmente.

9. Décanteur pour extracteurs liquide-liquide selon la revendication 7, caractérisé en ce que chaque organe de réglage (19) a la forme d'un bécher (28) avec des ouvertures (29) dans la paroi latérale (30), qui est relié avec l'ouverture de sortie (18) du canal avantageusement vertical correspondant (16), et dans chaque bécher (28) successif en direction de l'écoulement de la phase à évacuer, la surface transversale totale des ouvertures (20) est plus grande que dans le bécher (28) qui précède.

FIG. 1

FIG. 2

FIG. 5

FIG. 3

FIG. 4

FIG. 6

FIG. 7